# EUROPÄISCHE PATENTSCHRIFT

(11) **EP 0 770 531 B1**
(45) Veröffentlichungstag und Bekanntmachung des Hinweises auf die Patenterteilung: **04.10.2001**
(21) Anmeldenummer: 96116869.7
(22) Anmeldetag: 21.10.1996
(51) Int. Cl.: B60T 13/74

(54) **Kraftfahrzeug mit Energieversorgungseinrichtung für eine elektrische Fahrzeugbremse**
Vehicle comprising a power supply system for an electric vehicle brake
Véhicule ayant un dispositif d'alimentation pour un frein électrique du véhicule

(30) Priorität: 28.10.1995 DE 19540265
(43) Veröffentlichungstag der Anmeldung: 02.05.1997
(73) Patentinhaber: Continental Aktiengesellschaft, 30165 Hannover (DE)
(72) Erfinder: Dieckmann, Thomas, Dr., 30982 Pattensen (DE); Maron, Christof, Dr., 30989 Gehrden (DE); Prinzler, Hubertus, 30853 Langenhagen (DE)

(56) Entgegenhaltungen:
- EP-A- 0 207 280
- FR-A- 2 498 131
- US-A- 3 907 071
- US-A- 4 398 252

## Beschreibung

Die Erfindung betrifft ein Kraftfahrzeug mit einer elektrischen Fahrzeugbremsanlage gemäß dem Oberbegriff des Anspruchs 1.

Elektrisch betätigbare Bremsanlagen vom Brake-By-Wire-Typ erhalten die zur Bremszustellung erforderliche Energie nicht aus der Bewegung des Fahrerfußes sondern in elektrischer Form.
Aus Gründen der Betriebssicherheit muß eine elektrische Bremsanlage (Fremdkraftbremse) zweikreisig angelegt sein. Demzufolge muß jeder Bremskreis, den Vorschriften entsprechend, einen separaten Bremsenergiespeicher aufweisen.
Dabei ist zu berücksichtigen, daß kurzzeitige Leistungsspitzen des Bremssystems bei starker Bremsbetätigung das normale Bordnetz überlasten würden. Andererseits muß bei Ausfall des Bordnetzes der Weiterbetrieb der Bremsanlage für eine gewisse Zeit gewährleistet sein.

Diese Bedingungen werden trivialerweise mit einem elektrischen Speicher, d. h. wiederaufladbaren Akku (z. B.
Blei-Gel oder NiCd dä.); realisiert. Dieser wird im Bereitschaftsparallelbetrieb zum Bordnetz betrieben.

Oberflächlich betrachtet wäre durch eine solche Stromversorgungseinrichtung der Sicherheitsbestimmung nach Zweikreisigkeit auch bezüglich der Stromversorgung genüge getan. Bei genauerer Betrachtung stellt sich aber heraus, daß das Bordnetz bei einer Vollbremsung zusammenbricht.

Die Aufgabe der Erfindung besteht darin, eine rein elektrische Energieversorgungsstruktur für eine elektrische Bremsanlage zu schaffen. Diese Energieversorgungsstruktur soll an das bestehende Bordnetz gekoppelt sein.

Zwar sind zahlreiche Sicherheits-Versorgungseinrichtungen auch im Bereich der Kraftfahrzeugelektrik bekannt. Deren Aufgabe ist es, durch Kurzschlüsse und Versorgungsunterbrechungen verursachte Ausfälle zu verhindern. Die US 3,907,071 beschreibt ein Kontrollsystem für elektrisch betätigbare Anhängerbremsen. Das Zugfahrzeug weist eine Fahrzeugbatterie auf, die über eine Kontrolleinheit mit einer Anhängerbatterie und Bremsspulen verbindbar ist. Die Kontrolleinheit weist insbesondere ein Relais und einen Schalter auf, womit im Fall eines Defekts an der Anhängerbatterie auf die Batterie des Zugfahrzeugs umgeschaltet wird. Für den Bremsvorgang steht in jedem Fall lediglich die Kapazität nur einer einzigen Batterie zur Verfügung, was für eine Vollbremsung möglicherweise nicht ausreichend sein kann. Andererseits besteht die Gefahr, daß das allgemeine Bordnetz im Fall einer Vollbremsung zusammenbricht.

Das wesentliche Ziel der vorliegenden Erfindung besteht nun einerseits darin, eine Überlastung des Bardnetzes in jedem Fall zu vermeiden. Andererseits soll auch im Fall einer Vollbremsung ausreichend Strom für den Bremsvorgang zur Verfügung stehen. Dies wird mit den Merkmalen des Anspruchs 1 realisiert. Bevorzugte Weiterbildungen und Ausführungsformen ergeben sich mit den Merkmalen der Unteransprüche.

Gemäß der Erfindung sorgt ein Strombegrenzer dafür, daß die dem Bordnetz entnommene Leistung einen festgelegten Maximalwert nie übersteigt und so das Bordnetz nur gering belastet wird. Die Belastung des Bordnetzes bleibt somit weit unter dem aktuellen Bedarf der Bremse. Der restliche Leistungsbedarf wird dem zusätzlichen elektrischen Speicher entnommen.

Der zusätzliche Speicher ist hochstromfähig, d. h., daß der Batterie-Innenwiderstand möglichst klein ist und zwar kleiner oder höchstens ungefähr gleich dem Spulenwiderstand des Bremsaktuators <bzw. bei mehreren Bremsaktuatoren: kleiner oder höchstens ungefähr gleich dem resultierenden Widerstand aller gleichzeitig aktivierbaren Bremsaktuatoren). Erst durch die "Hochstromfähigkeit" der Bremsbatterie können die Bremsaktuatoren im Bedarfsfall mit einem extrem großen Strom beliefert werden.
Da zudem der Strombegrenzer keine Umschaltung auf eine einzige Batterie sondern nur eine Strombegrenzung bezüglich der zweiten Batterie durchführt, steht für den Bremsvorgang zusätzlich zu dem Strom aus der Bremsbatterie auch der amplitudenbegrenzte Strom aus der Bordbatterie nebst Generator zur Verfügung.

Die dem Bordnetz entnommene Leistung kann auf den mittleren Leistungsbedarf der Bremse begrenzt werden. Das Bordnetz wird somit gleichmäßig belastet und trägt im Fall einer Bremsung nur zu einem geringen Anteil zur Stromversorgung der Bremse bei. Nach Beendigung des Bremsvorgangs werden die Bremsenergiespeicher wieder aufgeladen.

Durch die Zwischenschaltung des Strombegrenzers bleibt das Bordnetz von bremsbedingten überlastungen verschont.

Auch bleiben die Akkus nicht stets vollgeladen sondern weisen periodische Belastungen auf. Hieraus resultiert eine längere Lebensdauer. Gleichzeitig ist hierdurch eine Funktionsüberwachung und Fehlerdiagnose möglich.

Der Spannungswandler kann klein, leicht und preiswert ausfallen, weil er nur für den mittleren Leistungsbedarf und nicht für den Spitzenleistungsbedarf ausgelegt werden muß.

Wegen des kurzzeitig extrem großen Stombedarfs während des Bremsvorgangs sind die Innenwiderstände der Bauteile vorzugsweise aufeinander abgestimmt.

Die Spannung der Energieversorgung der Bremse bzw. des Bremskreises kann von der Spannung des übrigen Bordnetzes abweichen. In einem solchen Fall sind Spannungswandler erforderlich, die eine höhere Spannung (z. B. 24 V) bereitstellen. Die strombegrenzende Funktion des zwischen Akku und Bordnetz befindlichen Strombegrenzers kann einfach und preiswert in einen solchen Spannungswandler integriert werden.

Im folgenden wird die erfindungsgemäße Bremsanlage anhand eines Blockschaltbildes erläutert.

Die elektrische Bremsanlage umfaßt einen bei Kraftfahrzeugen üblichen Generator 2 und eine übliche Bordnetzbatterie 4 zur Versorgung der an das Bordnetz 6 angeschlossenen Verbraucher. Darüber hinaus verfügt das Fahrzeug zusätzlich über mindestens ein elektrisches Bremsleitungsnetz 8 zum Betrieb elektrisch betreibbarer Bremsaktuatoren 10, die jeweils auf eine Bremsscheibe 12 einwirken können, um so eine Verzögerung an jeweile einem Fahrzeugrad 14 zu erzeugen. Die Bremsaktuatoren 10 sind mittels eines Bremspedals 16 aktivierbar. Das Bremspedal 16 ist an einen mechano-elektrischen Bremssignalwandler 18 gekoppelt, der die mit dem Hinunterdrücken des Bremspedals 16 gegebene mechanische Größe in ein entsprechendes elektrisches Signal umwandelt. In dem dargestellten Ausführungsbeispiel ist dem mechano-elektrischen Bremssignalwandler 18 eine Bremselektronik 20, z. B. mit Antiblockiersystem, nachgeschaltet. Dies alles ist aus dem Stand der Technik bekannt.
Darüber hinaus ist in dem Ausführungsbeispiel dem Bremsaktuator 10 über das elektrische Bremsleitungsnetz 8 ein hochstromfähiger Bremsenergiespeicher <Akku) 22 als Stromquelle zugeordnet.

Üblicherweise wird man nicht für jede einzelne Radbremse sondern nur lediglich für jeden Bremskreis einen solchen Bremsenergiespeicher 22 vorsehen.

Dieser hochstromfähige Bremsenergiespeicher (Akku) 22 ist dem Generator 2 und der Bordnetzbatterie 4 parallelgeschaltet. Um zu gewährleisten, daß die kurzzeitig erforderliche große Bremsleistung das Bordnetz nicht überlastet, ist zwischen Bordnetzbatterie 4 und Bremsenergiespeicher 22, bzw. zwischen Bordnetz 6 und elektrischem Bremsleitungsnetz 8, ein Strombegrenzer 24 zwischengeschaltet.

Die (Innen)widerstände des hochstromfähigen Bremsenergiespeichers (Akku) 22, des elektrischen Bremsleitungsnetzes 8 und des Bremsaktuators (bzw. der Bremsaktuatoren) 10 sind aufeinander abgestimmt.

In dem dargestellten Ausführungsbeispiel ist der Strombegrenzer 24 mit einem Spannungswandler 26 gekoppelt.

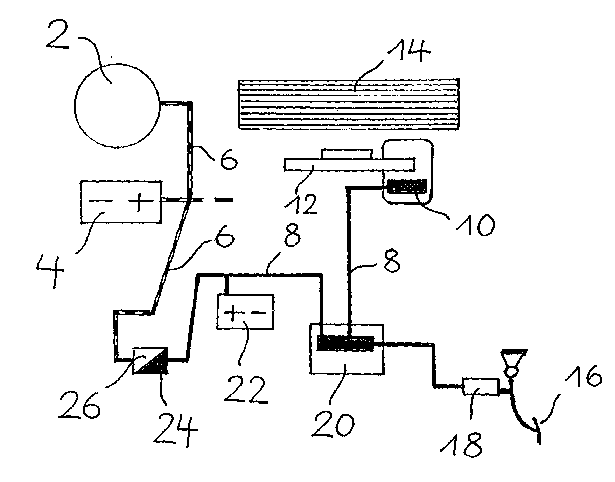

## Patentansprüche

1. Kraftfahrzeug mit einer elektrischen Fahrzeugbremsanlage, wobei das Kraftfahrzeug ein Bordnetz (6) mit einem Generator (2) und einen Speicher (4) aufweist, wobei die Bremsanlage mindestens ein elektrisches Bremsleitungsnetz (8) mit mindestens einer, einen elektrisch betreibbaren Bremsaktuator aufweisenden Bremse (10) und jeweils einem zusätzlichen elektrischen Speicher (22) umfasst,
**dadurch gekennzeichnet, dass**,
damit bei kurzzeitig erforderlicher großer Bremsleistung das Bordnetz (6) nicht überlastet wird,
- zwischen dem elektrischen Bremsleitungsnetz (18) und dem Bordnetz (6) ein Strombegrenzer (24) angeordnet ist
- und der zusätzliche elektrische Speicher (22) hochstromfähig ist.

2. Bremsanlage nach Anspruch 1, **dadurch gekennzeichnet, dass** die Innenwiderstände der Bauteile (8, 10, 22) aufeinander abgestimmt sind.

3. Bremsanlage nach Anspruch 1 oder 2, **dadurch gekennzeichnet, dass** der Strombegrenzer (24) mit einem Spannungswandler (26) gekoppelt ist.

## Claims

1. Automotive vehicle having an electrical vehicle braking system, the automotive vehicle comprising a mains power supply (6) with a generator (2) and a storage unit (4), and the braking system including at least one electrical brake line system (8) with at least one brake (10), which comprises an electrically operable brake actuator, and an additional respective electrical storage unit (22),
**characterised in that,**
so that the mains power supply (6) is not overloaded in the event of a high braking power which is required for a brief time,
- a current limiter (24) is disposed between the electrical brake line system (8) and the mains power supply (6),
- and the additional electrical storage unit (22) is capable of high current.

2. Braking system according to claim 1, **characterised in that** the internal resistances of the component parts (8, 10, 22) are adapted to one another.

3. Braking system according to claim 1 or 2, **characterised in that** the current limiter (24) is connected to a voltage transformer (26).

## Revendications

1. Véhicule automobile comportant une installation de freinage électrique, dans lequel le véhicule automobile comporte un réseau de bord (6) pourvu d'un générateur (2) et d'un accumulateur (4), et l'installation de freinage comprend au moins un réseau de ligne électrique de frein (8) comportant au moins un frein (10) comportant un actionneur de frein pouvant être actionné électriquement, et respectivement un accumulateur électrique supplémentaire (22),
**caractérisé en ce que**
afin que le réseau de bord (6) ne soit pas surchargé dans le cas d'une puissance de freinage intense nécessaire pendant un bref intervalle de temps,
- un limiteur de courant (24) est disposé entre le réseau de ligne électrique de frein (8) et le réseau de bord (6), et
- l'accumulateur électrique supplémentaire (22) peut fournir un courant intense.

2. Installation de freinage selon la revendication 1, **caractérisée en ce que** les résistances intérieures des composants (8, 10, 22) sont accordées entre elles.

3. Installation de freinage selon la revendication 1 ou 2, **caractérisée en ce que** le limiteur de courant (24) est couplé à un transformateur de tension (26).
